# EUROPÄISCHE PATENTSCHRIFT

(11) **EP 2 471 158 B1**
(45) Veröffentlichungstag und Bekanntmachung des Hinweises auf die Patenterteilung: **22.01.2020**
(21) Anmeldenummer: 10730451.1
(22) Anmeldetag: 05.07.2010
(51) Int. Cl.: H02J 7/14

(54) **SCHALTUNG ZUM BETREIBEN EINES HILFSAGGREGATES FÜR DEN START VON VERBRENNUNGSMASCHINEN**
CIRCUIT FOR OPERATING AN AUXILIARY DRIVE FOR STARTING OF COMBUSTION ENGINE
CIRCUIT DE FONCTIONNEMENT D'UN ENTRAÎNEMENT AUXILIAIRE POUR DÉMARRER UN MOTEUR À COMBUSTION

(30) Priorität: 28.08.2009 DE 102009028965
(43) Veröffentlichungstag der Anmeldung: 04.07.2012
(73) Patentinhaber: Robert Bosch GmbH, 70442 Stuttgart (DE)
(72) Erfinder: FASSNACHT, Jochen, 75365 Calw (DE); HEIDRICH, Torsten, 71665 Vaihingen/Enz (DE)
(86) Internationale Anmeldenummer: PCT/EP2010/059532
(87) Internationale Veröffentlichungsnummer: WO 2011/023438

(56) Entgegenhaltungen:
- EP-A1- 1 469 575
- WO-A1-2006/112510
- WO-A2-03/004315
- US-A1- 2004 084 232

## Beschreibung

### Stand der Technik

Die Erfindung betrifft eine Schaltung zum Betreiben eines Hilfsaggregates für den Start von Verbrennungsmaschinen über eine Starterbatterie, wobei die Schaltung zum Empfang eines state-of-function Signals, eines state-of-charge Signals und/oder eines state-of-health Signals aus einem Batteriemanagementsystem vorgesehen ist, die entsprechend anzeigen, ob die Starterbatterie fähig ist, das Hilfsaggregat zu betreiben, welchen Ladezustand die Starterbatterie aufweist und ob die Starterbatterie beschädigt ist und ein Verfahren zum Empfangen einer elektrischen Energie, die zum Betreiben eines Hilfsaggregates für den Start von Verbrennungsmaschinen über eine Starterbatterie geeignet ist.

Da die meisten Verbrennungsmotoren für Fahrzeuge im Stillstand kein Drehmoment erzeugen können, kann er auch nicht von selbst anlaufen. Zum Start des Verbrennungsmotors muss daher meist ein Ansaug- und ein Verdichtungstakt ausgelöst werden. Diese Aufgabe erfüllt herkömmlicherweise ein Hilfsaggregat, welches umgangssprachlich Starter oder Anlasser genannt wird. Dabei handelt es sich im Fahrzeug um einen von einer 12V-Batterie betriebenen Elektromotor.

Aus der Druckschrift EP 115 18 92 A2 ist bekannt, vor dem Start des Verbrennungsmotors die 12V-Batterie aus einer Hochvoltbatterie nachzuladen, falls die Ausgabespannung der 12V-Batterie zu niedrig ist. Aus der Druckschrift US 2001 041 952 ist bekannt, die der Hochvoltbatterie entnommene Leistung basierend auf einem Vergleich der Ausgabespannung der 12V-Batterie mit verschiedenen Referenzspannungen anzupassen. Aus den Druckschriften JP 2001 320 807 A, US 6522960 B2 und JP 33 81708 B2 ist bekannt, bei erkannter zu niedriger Ausgabespannung der 12V-Batterie diese zu laden und gleichzeitig zu prüfen, ob die aktuelle Ausgabespannung der 12V- Batterie ausreicht, um sofort einen Start des Verbrennungsmotors durchzuführen.

Für den Betrieb eines AxleSplit-Hybrids oder eines sonstigen Hybridfahrzeugs, bei welchem das Hilfsaggregat zum Start des Verbrennungsmotors aus einer 12V-Batterie betrieben wird, ist dieses Vorgehen sehr geschickt. Ist die Ruhespannung der 12V-Batterie beispielsweise aufgrund einer zu langen Parkdauer oder aufgrund eines hohen Ruhestromes und somit einer zu starken Entladung zu gering, so wird zuerst die Batterie nachgeladen, bevor ein Verbrennungsmotorstart durchgeführt wird. Hierdurch wird ein vermutlich scheiternder Verbrennungsmotorstartversuch vermieden, da dieser vermutlich nur zu einer noch stärkeren Entladung der Batterie führen würde.

Es zeigt sich jedoch häufig, dass Verbrennungsmotorstartversuche trotzdem scheitern obgleich das zuvor beschriebene System eine ausreichend hohe Ausgabespannung der 12V-Batterie für den Betrieb des Hilfsaggregates zum Start des Verbrennungsmotors erkennt.

WO 03/004315 A2 zeigt eine Schaltung gemäß dem Oberbegriff des Anspruchs 1

### Offenbarung der Erfindung

Aufgabe der vorliegenden Erfindung ist es daher, eine Schaltung zum Betreiben eines Hilfsaggregates für den Start von Verbrennungsmaschinen über eine Starterbatterie anzugeben, mit der scheiternde Verbrennungsmotorstartversuche zuverlässiger vermieden werden können.

Die Erfindung gibt daher eine Schaltung zum Betreiben eines Hilfsaggregates für den Start von Verbrennungsmaschinen über eine Starterbatterie an. Die Schaltung ist zum Empfang eines state-of-function Signals, eines state-of-charge Signals und/oder eines state-of-health Signals aus einem Batteriemanagementsystem vorgesehen. Die einzelnen Signale zeigen entsprechend an, ob die Starterbatterie fähig ist, das Hilfsaggregat zu betreiben, welchen Ladezustand die Starterbatterie aufweist und ob die Starterbatterie beschädigt ist. Erfindungsgemäß ist die Schaltung zur Aufnahme elektrischer Energie aus einer an die Schaltung angeschlossenen Hochvoltbatterie vorgesehen, wenn das state-of-function-Signal anzeigt, dass ein Betreiben des Hilfsaggregates mit der Starterbatterie nicht möglich ist, wenn das state-of-charge Signal anzeigt, dass die Starterbatterie einen zu geringen Ladezustand zum Betreiben der des Hilfsaggregates aufweist und/oder wenn das state-of-health Signal anzeigt, dass die Batterie beschädigt ist. Es hat sich gezeigt, dass bei der Verwendung der Ruhespannung, bzw. Batteriespannung als Indiz für die Fähigkeit einer Starterbatterie, einen Verbrennungsmotor erfolgreich zu starten, nur sehr grob auf die Ladung und überhaupt nicht auf die Leistungsfähigkeit der Batterie geschlossen werden kann. Diese Eigenschaften der Starterbatterie sind für einen erfolgreichen Motorstart jedoch wichtiger als die Batteriespannung. Da erfindungsgemäß anhand wenigstens einer dieser Eigenschaften die Leistungsfähigkeit der Starterbatterie abgeschätzt wird, werden erfolglose Verbrennungsmotorstartversuch erfolgreicher vermieden, was ein zu starkes Entladen der Starterbatterie vermeidet und ihre Lebensdauer spürbar steigert. Weiter ist die Schaltung mit der aufgenommenen Energie zum unmittelbaren Betreiben des Hilfsaggregates vorgesehen ist, wodurch zusammen mit der Starterbatterie versucht werden kann, mit vereinter Leistung den Verbrennungsmotor zu starten. Überdies ist ein Energiewandler zum Umwandeln der aus der Hochvoltbatterie aufgenommenen elektrischen Energie in eine zum Betreiben des Hilfsaggregates geeignete elektrische Energie vorgesehen. Dabei ist die Schaltung mit einer Vorsteuereinheit versehen.

Grundgedanke der Erfindung ist es daher, den voraussichtlichen Erfolg eines Verbrennungsmotorstartversuchs mit einer Starterbatterie nicht anhand deren Spannung sondern anhand der vom Batteriemanagementsystem bereitgestellten Werte über den Ladungszustand der Starterbatterie, über die Fähigkeit, eine bestimmte Funktion auszuführen und/oder über den Alterungszustand der Batterie abzuschätzen. Der große Vorteil der Erfindung ist nun, dass diese Werte zur Abschätzung des voraussichtlichen Erfolgs des Verbrennungsmotorstartversuchs mit der Starterbatterie deutlich aussagekräftiger sind, als die Batteriespannung. Idealerweise kann hierzu zunächst der state of function Wert herangezogen werden, der anzeigt, ob die Starterbatterie überhaupt dazu fähig ist, einen Verbrennungsmotorstart durchzuführen.

Dabei ist eine Vorsteuereinheit zum Einstellen der dem mindestens einen Energiewandler zugeführten Energie basierend auf einem vorbestimmten Motorstartleistungsbedarf vorgesehen, was zu einer ausreichend schnellen Beschränkung des Niedervoltanstieges im Falle eines Load-Dumps führt. Die Unteransprüche zeigen bevorzugte Weiterbildungen der Erfindung.

In einer besonderen Ausführung der Erfindung ist die Schaltung mit der aufgenommenen elektrischen zum Laden der Starterbatterie vorgesehen, wenn das state-of-charge-Signal aus dem Batteriemanagementsystem einen zu geringen Ladezustand der Starterbatterie zum Betreiben des Hilfsaggregates anzeigt. Das heißt, dass die Starterbatterie nun wenigstens basierend auf der Fähigkeit den Verbrennungsmotorstartversuch durchzuführen und basierend auf ihrem Ladezustand nachgeladen wird, was den großen Vorteil mit sich bringt, dass diese Werte zur Ermittlung des Nachladebedarfs der Starterbatterie bezüglich der Verbrennungsmotorstartfähigkeit deutlich aussagekräftiger sind, als die herkömmlich verwendete Batteriespannung.

Vorzugsweise kann in der Schaltung eine Anzeige zum Anzeigen der verbleibenden Ladezeit, bis die Starterbatterie ausreichend geladen ist vorgesehen sein, um das Hilfsaggregat zu betreiben. Diese Anzeige kann einem Fahrer beispielsweise als Orientierung dienen.

Alternativ oder zusätzlich kann die Schaltung mit der aufgenommenen elektrischen Energie zum Laden der Starterbatterie vorgesehen sein, wenn das state-of-health-Signal aus dem Batteriemanagementsystem einen ausreichend intakten Funktionszustand der Starterbatterie anzeigt, in dem die Starterbatterie zur Aufnahme einer ausreichenden elektrischen Energie fähig ist, um das Hilfsaggregat zu betreiben. Auf diese Weise kann entschieden werden, ob sich trotz einer Starterbatterieschädigung ein Nachladen lohnt, da hiermit der Verbrennungsmotor noch gestartet werden kann, oder ob dies nicht möglich ist und dann auch keine Nachladung stattfinden braucht.

Der Energiewandler kann dabei zum Beschränken der an das Hilfsaggregat abgegebenen elektrischen Energie vorgesehen sein. Auf diese Weise wird dem Load-Dump beim Abwurf des Hilfsaggregates nach dem Starten des Verbrennungsmotors Rechnung getragen und ein allzu starkes Ansteigen der Niedervoltspannung in der Schaltung vermieden.

In einer besonderen Ausführung kann die von der Hochvoltbatterie aufgenommene Energie basierend auf der an das Hilfsaggregat abgegebenen Energie beschränkt werden, so dass der Niedervoltanstieg im Falle des Load-Dumps ausgeregelt werden kann.

Die Erfindung gibt auch ein Verfahren zum Empfangen einer elektrischen Energie an, wobei die Energie zum Betreiben eines Hilfsaggregates für den Start von Verbrennungsmaschinen über eine Starterbatterie geeignet ist. Das Verfahren umfasst den Schritt Empfangen eines state-of-function Signals, eines state-of-charge Signals und/oder eines state-of-health Signals aus einem Batteriemanagementsystem, die entsprechend anzeigen, ob die Starterbatterie fähig ist, das Hilfsaggregat zu betreiben, welchen Ladezustand die Starterbatterie aufweist und ob die Starterbatterie beschädigt ist und den Schritt Empfangen der elektrischen Energie aus einer Hochvoltbatterie, wenn das state-of-function-Signal anzeigt, dass ein Betreiben des Hilfsaggregates mit der Starterbatterie nicht möglich ist, wenn das state-of-charge Signal anzeigt, dass die Starterbatterie einen zu geringen Ladezustand zum Betreiben der des Hilfsaggregates aufweist und/oder wenn das state-of-health Signal anzeigt, dass die Starterbatterie beschädigt ist.

Die Merkmale gemäß den Weiterbildungen der erfindungsgemäßen Schaltung können im erfindungsgemäßen Verfahren entsprechend umgesetzt werden.

### Zeichnungen

Nachfolgend wird ein nicht einschränkendes Ausführungsbeispiel der Erfindung unter Bezugnahme auf die begleitende Zeichnung im Detail beschrieben. In der Zeichnung zeigt:

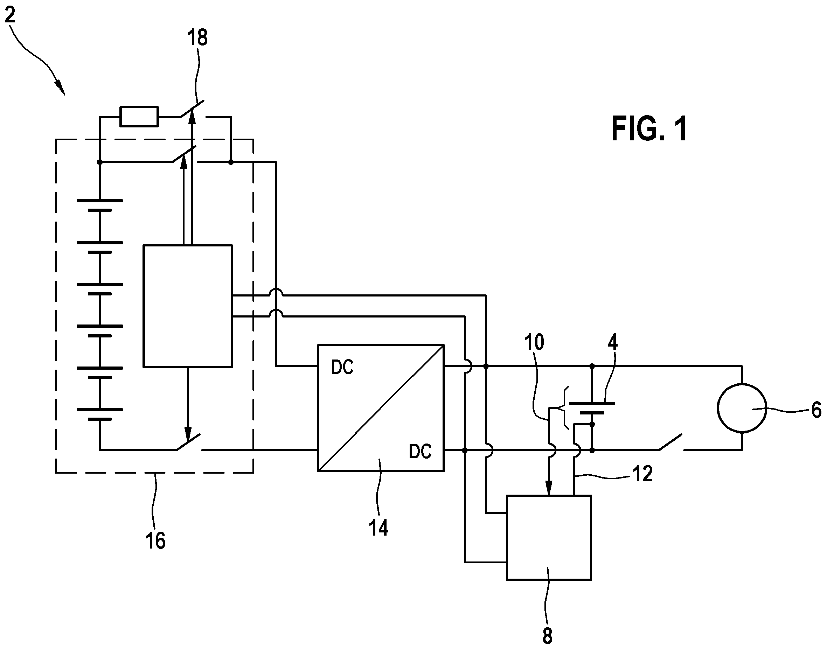

- Figur 1: ein Schaltbild eines 14V-Start-Stopp-Systems als Ausführungsbeispiel für eine erfindungsgemäße Schaltung.

### Bevorzugte Ausführungsformen der Erfindung

Nachfolgend wird unter Bezugnahme auf die Figur eine bevorzugte Ausführungsform der Erfindung im Detail beschrieben.

In Figur 1 ist ein Schaltbild eines 14V-Start-Stopp-Systems 2 als Ausführungsbeispiel für eine erfindungsgemäße Schaltung gezeigt.

Das 14V-Start-Stopp-System 2 verfügt über eine 12V-Batterie 4 zum Betreiben eines Starters 6 als Hilfsaggregat zum Starten des Verbrennungsmotors eines Fahrzeuges. Ein Batteriemanagementsystem 8, nachstehend BMS 8 genannt, erfasst die Klemmenspannung 10 und den Klemmenstrom 12 der 12V-Batterie 4 und bestimmt daraus über die Zeit einen state-of-function Wert, einen state-of-charge Wert und einen state-of-health Wert. Der state-of-function Wert zeigt an, ob die 12V-Batterie 4 überhaupt dazu fähig ist, den Starter 6 zu betreiben. Der state-of-charge Wert gibt Auskunf über den Ladezustand der 12V-Batterie 4. Aus dem state-of-health Wert lässt sich entnehmen, ob die 12V-Batterie 4 beschädigt beziehungsweise gealtert ist.

In herkömmlichen Fahrzeugen, welche überein gezeigtes 14V-Start-Stopp-System 2 verfügen, dient das BMS 8 dazu, zu vermeiden, dass der Verbrennungsmotor aufgrund einer leistungsschwachen 12V-Batterie 4 nicht mehr gestartet werden kann. Falls also die 12V-Batterie 4 zu stark entladen oder aus einem anderen Grund nicht leistungsfähig genug ist, was das BMS 8 detektiert, so wird der Verbrennungsmotor nicht mehr abgeschaltet. Falls sich allerdings die 12V-Batterie 4 über eine zu lange Parkdauer oder einen zu hohen Ruhestrombedarf zu stark entladen hat, greift dieser Mechanismus nicht mehr.

Bei einem Fahrzeug, bei welchem das 14V-Start-Stopp-System 2 über einen DC/DC-Wandler 14 versorgt wird, kann vor dem Start des Verbrennungsmotors die 12V-Batterie 4 über den DC/DC-Wandler 14 aus einer Hochvoltbatterie 16 nachgeladen werden. Hierzu muss die leistungsschwache 12V-Batterie 4 lediglich eine Leistung zur Versorgung der Hochvoltbatterie-Steuergeräte bereitstellen, die jedoch verglichen mit der benötigten Leistung zum Betreiben des Starters 6 wesentlich geringer ist. Wird die 12V-Batterie 4 auf diese Weise nachgeladen kann der Verbrennungsmotorstart problemlos durchgeführt werden.

Erfindungsgemäß erfolgt die Nachladung der 12V-Batterie 4 nicht anhand deren Klemmenspannung 10, sondern anhand des oben beschriebenen state-of-charge Wertes, des state-of-health Wertes oder des state-of-function Wertes. Diese Werte werden wie bereits erwähnt vom BMS 8 bereitgestellt.

Der große Vorteil der Erfindung ist nun, dass die Werte, die zur Ermittlung des Nachladebedarfs verwendet werden, bezüglich der Verbrennungsmotorstartfähigkeit deutlich aussagekräftiger sind, als die Klemmspannung 10 der 12V-Batterie 4. Idealerweise kann hierzu der state-offunktion Wert verwendet werden. Falls dieses Kriterium die Startfähigkeit verneint und der state-of-charge Wert auf eine entladene 12V-Batterie 4 deutet, so kann diese nachgeladen werden, bevor ein Verbrennungsmotorstart erfolgt. Falls der state-of-health Wert auf eine Schädigung der 12V-Batterie 4 deutet, so kann anhand des state-of-health Wert entschieden werden, ob sich trotz der Batterieschädigung ein Nachladen lohnt um den Verbrennungsmotor noch zu starten, oder ob dies nicht möglich ist und dann auch keine Nachladung stattfinden braucht.

Die Zeitverzögerung aufgrund der Nachladung kann dem Fahrer des Fahrzeuges über eine Anzeige mitgeteilt werden.

Falls der DC/DC-Wandler 14 über eine ausreichende Leistungsfähigkeit und Kurzschlussfestigkeit verfügt, so kann der Verbrennungsmotor mit oder ohne vorherigem Nachladen der 12V-Batterie 4 mit vereinter Leistung des DC/DC-Wandlers 14 und der 12V-Batterie 4 gestartet werden. Vorzugsweise wird dabei auf den Load-Dump beim Abwurf des Starters 6 geachtet, damit die Niedervoltspannung nicht zu stark ansteigt. Dies tritt beispielsweise bei einer kalten oder geschädigten 12V-Batterie 4 auf, da sie dann einen hohen Innenwiderstand aufweist. In diesem Fall wird bevorzugt eine ausreichend schnelle Regelung und/oder eine Vorsteuerung 18 mit bekannten Motorleistungsbedarf zum Behandeln des Load-Dumps eingesetzt. Die Entscheidung, ob der DC/DC-Wandler 14 zu Unterstützung der 12V-Batterie 4 benötigt wird, kann wie oben anhand des state-of-function Wertes, des state-of-charge Wertes und/oder des state-of-health Wertes vorgenommen werden.

Erfindungsgemäß wird zur Abschätzung der Erfolgsaussichten eines Verbrennungsmotorstarts mit einem Starter 6 der von einem BMS 8 bereitgestellte state-of-function Wert, der state-of-charge Wert und/oder der state-of-health Wert herangezogen.

Neben der obigen Offenbarung wird hier ausdrücklich auf die Offenbarung der Figuren verwiesen.

## Patentansprüche

1. Schaltung zum Betreiben eines Hilfsaggregates (6) für den Start von Verbrennungsmaschinen über eine Starterbatterie (4), wobei die Schaltung (2) zum Empfang eines state-of-function Signals, eines state-of-charge Signals und/oder eines state-of-health Signals aus einem Batteriemanagementsystem (8) vorgesehen ist, die entsprechend anzeigen, ob die Starterbatterie (4) fähig ist, das Hilfsaggregat (6) zu betreiben, welchen Ladezustand die Starterbatterie (4) aufweist und ob die Starterbatterie (4) beschädigt ist, wobei die Schaltung (2) zur Aufnahme elektrischer Energie aus einer an die Schaltung (2) angeschlossenen Hochvoltbatterie (16) vorgesehen ist, wenn das state-of-function-Signal anzeigt, dass ein Betreiben des Hilfsaggregates (6) mit der Starterbatterie (4) nicht möglich ist, wenn das state-of-charge Signal anzeigt, dass die Starterbatterie (4) einen zu geringen Ladezustand zum Betreiben der des Hilfsaggregates (6) aufweist und/oder wenn das state-of-health Signal anzeigt, dass die Starterbatterie (4) beschädigt ist, wobei die Schaltung (2) mit der aufgenommenen Energie zum unmittelbaren Betreiben des Hilfsaggregates (6) vorgesehen ist, wobei ein Energiewandler (14) zum Umwandeln der aus der Hochvoltbatterie (16) aufgenommenen elektrischen Energie in eine zum Betreiben des Hilfsaggregates (6) geeignete elektrische Energie vorgesehen ist, und wobei die Schaltung mit einer Vorsteuereinheit (18) versehen ist, **dadurch gekennzeichnet, dass** die Vorsteuereinheit (18) zum Einstellen der den Energiewandler (14) zugeführten Energie basierend auf einem vorbestimmten Motorstartleistungsbedarf vorgesehen ist

2. Schaltung nach Anspruch 1; wobei die Schaltung (2) mit der-aufgenommenen elektrischen Energie zum Laden der Starterbatterie (4) vorgesehen ist, wenn das state-of-charge-Signal aus dem Batteriemanagementsystem (8) einen-zu geringen Ladezustand der Starterbatterie (4) zum Betreiben des Hilfsaggregates (6) anzeigt.

3. Schaltung nach Anspruch 2, mit einer Anzeige zum Anzeigen der verbleibenden Ladezeit, bis die Starterbatterie (4) ausreichend geladen ist, um das Hilfsaggregat (6) zu betreiben.

4. Schaltung nach einem der Ansprüche 1 bis 3, wobei die Schaltung (2) mit der aufgenommenen elektrischen Energie zum Laden der Starterbatterie (4) vorgesehen ist, wenn das state-of-health-Signal aus dem Batteriemanagementsystem (8) einen ausreichend intakten Funktionszustand der Starterbatterie (4) anzeigt, in dem die Starterbatterie (4) zur Aufnahme einer ausreichenden elektrischen Energie fähig ist, um das Hilfsaggregat (6) zu betreiben.

5. Schaltung nach einem vorhergehenden Ansprüche, wobei der Energiewandler (14) zum Beschränken der an das Hilfsaggregat (6) abgegebenen elektrischen Energie vorgesehen ist.

6. Schaltung nach Anspruch 5, wobei die von der Hochvoltbatterie (16) aufgenommene Energie basierend auf der an das Hilfsaggregat (6) abgegebenen Energie beschränkt wird.

7. Verfahren zum Empfangen einer elektrischen Energie, die zum Betreiben eines Hilfsaggregates (6) für den Start von Verbrennungsmaschinen über eine Starterbatterie (4) geeignet ist, wobei eine Schaltung (2) mit der aufgenommenen Energie zum unmittelbaren Betreiben des Hilfsaggregates (6) vorgesehen ist, wobei ein Energiewandler (14) zum Umwandeln der aus der Hochvoltbatterie (16) aufgenommenen elektrischen Energie in eine zum Betreiben des Hilfsaggregates (6) geeignete elektrische Energie vorgesehen ist, und wobei die Schaltung zum Betreiben des Hilfsaggregats (6) eine Vorsteuereinheit (18) umfasst, und wobei das Verfahren folgende Schritte umfasst:
- Empfangen eines state-of-function Signals, eines state-of-charge Signals und/oder eines state-of-health Signals aus einem Batteriemanagementsystem (8), die entsprechend anzeigen, ob die Starterbatterie (4) fähig ist, das Hilfsaggregat (6) zu betreiben, welchen Ladezustand die Starterbatterie (4) aufweist und ob die Starterbatterie (4) beschädigt ist, und
- Empfangen der elektrischen Energie aus einer Hochvoltbatterie (16), wenn das state-of-function-Signal anzeigt, dass ein Betreiben des Hilfsaggregates (6) mit der Starterbatterie (4) nicht möglich ist, wenn das state-of-charge Signal anzeigt, dass die Starterbatterie (4) einen zu geringen Ladezustand zum Betreiben der des Hilfsaggregates (6) aufweist und/oder wenn das state-of-health Signal anzeigt, dass die Starterbatterie (4) beschädigt ist,
- Einstellen der dem Energiewandler (14) zugeführten Energie basierend auf einem vorbestimmten Motorstartleistungsbedarf mittels der Vorsteuereinheit (18).

## Claims

1. Circuit for operating an auxiliary assembly (6) for starting internal combustion engines by means of a starter battery (4), wherein the circuit (2) is intended to receive a state-of-function signal, a state-of-charge signal and/or a state-of-health signal from a battery management system (8), which signals accordingly indicate whether the starter battery (4) is capable of operating the auxiliary assembly (6), the state of charge of the starter battery (4), and whether the starter battery (4) is damaged, wherein the circuit (2) is intended to receive electrical energy from a high-voltage battery (16), which is connected to the circuit (2), when the state-of-function signal indicates that operation of the auxiliary assembly (6) with the starter battery (4) is not possible, when the state-of-charge signal indicates that the state of charge of the starter battery (4) is too low to operate the auxiliary assembly (6) and/or when the state-of-health signal indicates that the starter battery (4) is damaged, wherein the circuit (2) is intended to directly operate the auxiliary assembly (6) with the received energy, wherein an energy converter (14) is intended to convert the electrical energy which is received from the high-voltage battery (16) into an electrical energy which is suitable for operating the auxiliary assembly (6), and wherein the circuit is provided with a pilot control unit (18), **characterized in that** the pilot control unit (18) is intended to adjust the energy which is supplied to the energy converter (14), based on a predetermined engine starting power requirement.

2. Circuit according to Claim 1, wherein the circuit (2) is intended to charge the starter battery (4) with the received electrical energy when the state-of-charge signal from the battery management system (8) indicates that the state of charge of the starter battery (4) is too low to operate the auxiliary assembly (6).

3. Circuit according to Claim 2, comprising an indicator for indicating the charging time remaining until the starter battery (4) is sufficiently charged to operate the auxiliary assembly (6).

4. Circuit according to one of Claims 1 to 3, wherein the circuit (2) is intended to charge the starter battery (4) with the received electrical energy when the state-of-health signal from the battery management system (8) indicates a sufficiently intact state of function of the starter battery (4), in which state of function the starter battery (4) is capable of receiving enough electrical energy to operate the auxiliary assembly (6).

5. Circuit according to one of the preceding claims, wherein the energy converter (14) is intended to restrict the electrical energy which is output to the auxiliary assembly (6).

6. Circuit according to Claim 5, wherein the energy which is received from the high-voltage battery (16) is restricted based on the energy which is output to the auxiliary assembly (6).

7. Method for receiving an electrical energy which is suitable for operating an auxiliary assembly (6) for starting internal combustion engines by means of a starter battery (4), wherein a circuit (2) is intended to directly operate the auxiliary assembly (6) with the received energy, wherein an energy converter (14) is intended to convert the electrical energy which is received from the high-voltage battery (16) into an electrical energy which is suitable for operating the auxiliary assembly (6), and wherein the circuit for operating the auxiliary assembly (6) comprises a pilot control unit (18), and wherein the method comprises the following steps:
- receiving a state-of-function signal, a state-of-charge signal and/or a state-of-health signal from a battery management system (8), which signals accordingly indicate whether the starter battery (4) is capable of operating the auxiliary assembly (6), the state of charge of the starter battery (4), and whether the starter battery (4) is damaged, and
- receiving the electrical energy from a high-voltage battery (16) when the state-of-function signal indicates that operation of the auxiliary assembly (6) with the starter battery (4) is not possible, when the state-of-charge signal indicates that the state of charge of the starter battery (4) is too low to operate the auxiliary assembly (6) and/or when the state-of-health signal indicates that the starter battery (4) is damaged,
- adjusting the energy which is supplied to the energy converter (14), based on a predetermined engine starting power requirement, by means of the pilot control unit (18) .

## Revendications

1. Circuit destiné à faire fonctionner une unité auxiliaire (6) de démarrage de moteurs à combustion interne par le biais d'une batterie de démarrage (4), le circuit (2) étant prévu pour recevoir un signal d'état de fonction, un signal d'état de charge et/ou un signal d'état de santé d'un système de gestion de batterie (8), lesquels signaux indiquent chacun si la batterie de démarrage (4) est capable de faire fonctionner l'unité auxiliaire (6), quel est l'état de charge de la batterie de démarrage (4) et si la batterie de démarrage (4) est endommagée, le circuit (2) étant prévu pour recevoir de l'énergie électrique d'une batterie à haute tension (16) raccordée au circuit (2) lorsque le signal d'état de fonction indique qu'un fonctionnement de l'unité auxiliaire (6) n'est pas possible avec la batterie de démarrage (4) lorsque le signal d'état de charge indique que la batterie de démarrage (4) a un état de charge trop bas pour faire fonctionner l'unité auxiliaire (6) et/ou si le signal d'état de santé indique que la batterie de démarrage (4) est endommagée, le circuit (2) est prévue pour faire fonctionner immédiatement l'unité auxiliaire (6) avec l'énergie reçue, un convertisseur d'énergie (14) étant prévu pour convertir l'énergie électrique reçue de la batterie à haute tension (16) en une énergie électrique appropriée au fonctionnement de l'unité auxiliaire (6), et le circuit étant pourvu d'une unité pilote (18), **caractérisé en ce que** l'unité pilote (18) est prévue pour ajuster l'énergie fournie au convertisseur d'énergie (14) sur la base d'un besoin prédéterminé de puissance de démarrage de moteur.

2. Circuit selon la revendication 1, le circuit (2) étant prévu pour recevoir l'énergie électrique reçue pour charger la batterie de démarrage (4) lorsque le signal d'état de charge provenant du système de gestion de batterie (8) indique un état de charge trop bas de la batterie de démarrage (4) pour faire fonctionner l'unité auxiliaire (6).

3. Circuit selon la revendication 2, comprenant un affichage destiné à afficher le temps de charge restant jusqu'à ce que la batterie de démarrage (4) soit suffisamment chargée pour faire fonctionner l'unité auxiliaire (6).

4. Circuit selon l'une des revendications 1 à 3, le circuit (2) est prévu pour charger la batterie de démarrage (4) avec l'énergie électrique reçue lorsque le signal d'état du système de gestion de batterie (8) indique un état de fonctionnement suffisamment intact de la batterie de démarrage (4) dans lequel la batterie de démarrage (4) est capable de recevoir une énergie électrique suffisante pour faire fonctionner l'unité auxiliaire (6).

5. Circuit selon l'une des revendications précédentes, le convertisseur d'énergie (14) étant prévu pour limiter l'énergie électrique fournie à l'unité auxiliaire (6).

6. Circuit selon la revendication 5, l'énergie reçue par la batterie à haute tension (16) étant limitée en fonction de l'énergie délivrée à l'unité auxiliaire (6) .

7. Procédé de réception d'énergie électrique appropriée pour faire fonctionner une unité auxiliaire (6) pour démarrer des moteurs à combustion interne par le biais d'une batterie de démarrage (4), un circuit (2) étant prévu pour faire fonctionner immédiatement l'unité auxiliaire (6) avec l'énergie reçue, un convertisseur d'énergie (14) étant prévu pour convertir l'énergie électrique reçue de la batterie à haute tension (16) en une énergie électrique appropriée pour faire fonctionner l'unité auxiliaire (6), et le circuit comprenant une unité pilote (18) pour faire fonctionner l'unité auxiliaire (6), et le procédé comprenant les étapes suivantes :
- recevoir un signal d'état de fonction, un signal d'état de charge et/ou un signal d'état de santé d'un système de gestion de batterie (8), lesquels signaux indiquent chacun si la batterie de démarrage (4) est capable faire fonctionner l'unité auxiliaire (6), quel est l'état de charge de la batterie de démarrage (4) et si la batterie de démarrage (4) est endommagée, et
- recevoir l'énergie électrique d'une batterie à haute tension (16) lorsque le signal d'état de fonction indique qu'il est impossible de faire fonctionner l'unité auxiliaire (6) avec la batterie de démarrage (4) lorsque le signal d'état de charge indique que la batterie de démarrage (4) a un état de charge trop bas pour faire fonctionner l'unité auxiliaire (6) et/ou lorsque le signal d'état de santé indique que la batterie de démarrage (4) est endommagée,
- régler l'énergie fournie par le convertisseur d'énergie (14) en fonction d'un besoin prédéterminé de puissance de démarrage de moteur au moyen de l'unité pilote (18).
